# DEMANDE DE BREVET EUROPEEN

(11) **EP 2 687 629 A1**
(43) Date de publication de la demande: **22.01.2014**
(21) Numéro de dépôt: 12176808.9
(22) Date de dépôt: 18.07.2012
(51) Int. Cl.: D06N 7/00, C08J 9/00, C08L 7/02, C08L 9/08, C08L 83/12, C08C 1/14

(54) **Composition de latex**

(71) Demandeur: Sobeltec, 9600 Ronse (BE)
(72) Inventeur: Bostyn, Arnaud R.W., 1180 Brussels (BE)
(74) Mandataire: Coulon, Ludivine

(57) **Abrégé**

La présente invention se rapporte à une composition de latex comprenant :
a) au moins un composé de latex contenant moins de 55% de styrène,
b) un agent gélifiant sensible à la chaleur choisi dans le groupe des polyéther-polysiloxanes,
c) un agent moussant, et
d) au moins un agent vulcanisant.

## Description

La présente invention se rapporte à une composition de latex comprenant :
a) au moins un composé de latex contenant moins de 55% de styrène,
b) un agent gélifiant sensible à la chaleur choisi dans le groupe des polyéther-polysiloxanes,
c) un agent moussant, et
d) au moins un agent vulcanisant.

Une telle composition de latex est par exemple utilisée pour former des protubérances pleines antidérapantes sur des dossiers de tapis ou carpettes, paillassons et analogues. Dans cette application particulière, des gouttes de taille prédéterminée de la composition de latex susdite présentant une densité élevée généralement supérieure à 700 g/l sont appliquées sur ces tapis tuftés ou aiguilletés et sont ensuite gélifiées thermiquement. La gélification de ces gouttes forme des protubérances (pastilles) sensiblement pleines qui présentent un coefficient de friction élevé avec le sol sur lequel elles sont mises en contact et confèrent ainsi des propriétés antidérapantes au tapis. Ces protubérances doivent garder leur forme et ne pas s'écraser lorsqu'une pression y est exercée, par exemple lorsqu'on marche sur le tapis. C'est pourquoi, pour cette application particulière, la composition de latex doit être peu moussée afin qu'elle présente cette densité élevée supérieure à 700 g/l voire de l'ordre de 750 g/l. L'agent moussant utilisé actuellement à cette fin est typiquement un agent moussant anionique choisi parmi ceux largement connus de l'état de la technique, comme par exemple un agent moussant anionique choisi dans le groupe des alkylesters sulfonates, des sulfonates d'alpha-oléfines, des alkylsulfates, des alkyléthersulfates ou encore des sels d'acides gras.

Malheureusement, une telle composition, comprenant un agent gélifiant choisi dans le groupe des polyéther-polysiloxanes et un agent moussant anionique (tel que ceux utiliser actuellement) ne permet pas d'obtenir une composition de latex stable et gélifiable de faible densité après un moussage important, par exemple pour former les dossiers continus et homogènes de tapis classiques (par exemple d'intérieur), des matelas en latex, des supports muraux ou des dessous de tapis en tissé ou non-tissé. En effet, la fabrication des dossiers de tapis, carpettes ou paillassons requiert l'application d'une couche uniforme de latex sur la face du tapis, carpette ou paillasson qui sera en contact avec le sol. Cette couche, uniforme et plane à l'état mouillé, appliquée par un applicateur industriel comme une racle ou un rouleau, doit pouvoir être suffisamment moussée avant gélification afin d'obtenir, après séchage, des caractéristiques antidérapantes, résilientes, résistantes à l'abrasion et à l'humidité. De plus, la densité de ce type de composition doit être relativement faible pour ne pas alourdir inutilement le tapis et conférer à cette couche moussée la résilience nécessaire au confort lorsqu'elle est piétinée. En effet, une composition telle que celle utilisée pour la formation de protubérances pleines antidérapantes ne permet pas d'amortir les chocs car une densité de l'ordre de 700 g/l de ladite composition de latex ne lui confère pas de capacité d'amortissement.

Dans le cadre de la fabrication de matelas, la densité du produit doit également être peu élevée sans quoi le matelas ainsi produit ne serait ni manipulable à cause de son poids, ni confortable de par sa faible résilience. De plus, pour les matelas, la composition de latex doit présenter des capacités d'étalement lorsqu'elle est versée dans les moules pour former une épaisseur homogène et une surface plane des deux côtés du matelas. Ces compositions de latex sont donc aujourd'hui fortement moussées pour atteindre des densités inférieures à 400 g/l.

Dans le cadre de la fabrication de supports muraux, la gélification est nécessaire afin de permettre un estampage, avant vulcanisation, ce qui apporte un aspect décoratif.

Aujourd'hui, les compositions de latex utilisées pour la fabrication de dossiers de tapis utilisent des agents gélifiants tels que l'acétate d'ammonium, le sulfate d'ammonium, le chlorure d'ammonium et les fluorosilicates de métaux alcalins, comme par exemple le fluorosilicate de sodium (FSS). Avant gélification, le moussage de ces compositions à base de latex est toujours assuré par l'ajout d'un agent moussant anionique, par exemple un tensioactif à base d'oléate de potassium (voir, par exemple, le document US 4214053).

En ce qui concerne les compositions de latex utilisées pour la fabrication de matelas, deux procédés majeurs sont actuellement d'application, à savoir le procédé Talalay et le procédé Dunlop. Pour le premier, l'agent gélifiant utilisé est le gaz carbonique tandis que, pour le second, l'agent gélifiant est le fluorosilicate de sodium (FSS).

Cependant, de telles compositions comprenant des sels d'ammonium ou des fluorosilicates de métaux alcalins comme agents de gélification sont nocives pour la santé humaine. En effet, l'inhalation des composés volatils émis au départ de ces agents gélifiants irrite gravement les voies respiratoires. Par exemple, lors d'expositions prolongées, l'acétate d'ammonium dégage de l'ammoniac et de l'acide acétique qui, en plus de leur odeur désagréable, irritent les muqueuses et les voies respiratoires supérieures tandis que le fluorosilicate de sodium (FSS) peut provoquer une bronchopneumonie, un oedème pulmonaire, une diminution de la fonction pulmonaire voire des problèmes cardiaques et nerveux (Clayton, G.D. and Clayton, F.E., Eds., Patty's Industrial Hygiene and Toxicology, 3rd ed., Vol. Il A, B, C, John Wiley and Sons, NewYork, 1981). De plus, en ce qui concerne le FSS, des produits toxiques tels que le fluorure d'hydrogène, des oxydes de silicium et des gaz irritants, sont dégagés lors de son chauffage, ce qui est le cas lors des étapes de gélification de la composition à base de latex, mettant alors également en danger les ouvriers de la chaîne de fabrication de tapis ou de matelas.

La présente invention a donc pour but de pallier les inconvénients de l'état de la technique en procurant une composition de latex à la fois exempte d'agents gélifiants toxiques et qui est gélifiable après un moussage important nécessaire à l'obtention d'une faible densité de la composition de latex pour la fabrication de dossiers de tapis et la fabrication de matelas.

Au sens de la présente invention, on entend par les termes « composition de latex stable », une composition de latex moussée présentant une densité inférieure à 450 g/l, de préférence inférieure à 350 g/l, dont la mousse n'augmente pas en densité suite à une déstabilisation, par exemple suite à la présence d'un antimousse présent dans le latex et/ou le mauvais choix des agents moussants à caractère stabilisant. Par ailleurs, une composition de latex stable selon la présente invention présente une mousse qui ne prend pas en masse et ne coagule pas à température ambiante, c'est-à-dire en dessous de températures de l'ordre de 40°C.

Au sens de la présente invention, on entend par les termes « composition de latex gélifiable », une composition de latex moussée présentant une densité inférieure à 450 g/l, de préférence inférieure à 350 g/l, ou une composition de latex non moussée qui prend en masse et se solidifie en moins de 10 secondes, lors de son application, au contact d'une source de chaleur telle qu'une lampe infrarouge, halogène ou de l'air chaud suivant l'essais suivant :
- application sur un support et sur une hauteur de 2 mm d'une quantité comprise entre 2 et 7 g d'une composition de latex moussée ou non moussée à une densité inférieure à 450 g/l,
- chauffage de ladite composition de latex appliquée sur ledit support à l'aide d'une lampe infrarouge d'une puissance de 250 Watt placée à une hauteur de 5 cm par rapport au support, durant un temps maximal de 15 secondes.

Au terme de cette opération de chauffage, pour que la composition de latex soit considérée comme étant une composition de latex gélifiable au sens de la présente invention, la gélification (coagulation) de ladite composition de latex doit être totale, c'est-à-dire que l'opération de chauffage susdite doit permettre d'obtenir une masse solide non liquide de ladite composition de latex.

En outre, le fait qu'un latex moussé puisse être gélifié permet d'abord à la mousse de rester stable dans des couches minces telles que celles des tapis mais surtout dans des couches supérieures à 5 mm telles que celles des matelas et permet ensuite l'estampage par rouleau, ce qui crée un dessin dans la mousse.

A cette fin, il est prévu suivant l'invention, une composition telle qu'indiquée au début caractérisée en ce que ledit agent moussant est un agent moussant non ionique et en ce que ladite composition de latex présente, à l'état moussé et gélifié, une densité inférieure à 450 g/l, de préférence inférieure à 350 g/l.

Il est en effet apparu de manière surprenante que la non gélification de la mousse de latex de faible densité était due au fait que les agents gélifiants choisi dans le groupe des polyéther-polysiloxanes n'étaient pas compatibles avec les agents moussants ioniques pour des compositions de latex présentant après moussage une densité inférieure à 450 g/l, de préférence inférieure à 350 g/l.

L'agent gélifiant choisi dans le groupe des polyéther-polysiloxanes et déjà utilisé pour la formation de protubérances à l'arrière des tapis antidérapants présente pourtant l'avantage d'être un agent gélifiant non toxique au départ duquel l'émission de composés volatils nocifs pour la santé humaine est fortement réduite mais, malheureusement, il ne permet pas la gélification pour l'obtention d'une mousse stable à des densités inférieures à 450 g/l.

Dans le cadre de la présente invention, il a été observé, que cette impossibilité à gélifier était, contre toute attente, due à la seule présence d'agents moussants anioniques utilisés actuellement. Ceci est d'autant plus surprenant que dans les compositions de latex à densité plus élevée, l'agent moussant est anionique et d'un type similaire à ceux couramment utilisés pour les applications de latex de faible densité avec les agents gélifiants conventionnels tels que l'acétate d'ammonium, le sulfate d'ammonium, le chlorure d'ammonium et les fluosilicates de métaux alcalins. En effet, les agents moussants anioniques généralement utilisés sont des agents stabilisants par la présence de charges négatives qui ne défavorisent pas la prise du coagulant. Il s'est avéré que les agents coagulants ou gélifiants sélectionnés dans le cadre de la présente invention présentent une coagulation dépendante de la température et qu'en présence d'agents anioniques moussants utilisés actuellement, cette coagulation est freinée dans le latex, ce qui empêche ainsi la gélification.

Selon la présente invention, les agents moussants sélectionnés sont non ioniques et jouent le rôle d'anticoagulant. De cette façon, ils stabilisent la composition moussée à faible densité et empêchent la coagulation à température de moussage (entre 1 et 40°C). Une fois la composition de latex moussée soumise à la température de coagulation (entre 45 et 240°C), l'agent moussant ne joue plus le rôle d'anticoagulant car l'agent coagulant sensible à la chaleur (heat sensitive) agit et entraîne une augmentation de la viscosité de la composition de latex de telle sorte que ladite composition de latex est gélifiée de manière stable et durable. Ceci permet également d'obtenir un mélange prêt à l'emploi contenant l'agent moussant, l'agent gélifiant, un agent vulcanisant et le composé de latex, stable au stockage (entre 5 et 40°C) et au transport. La présence de l'agent gélifiant dans le latex permet très avantageusement de pouvoir appliquer le produit sans risque de gélification prématuré lors du moussage et de l'étalement du produit sur le tapis contrairement aux systèmes actuels qui, eux, demandent une utilisation immédiate du produit, après injection du coagulant lors du moussage, rendant inévitable des nettoyages systématiques des conduits et outillages lors d'un arrêt machine.

Tout aussi avantageusement, selon la présente invention, ledit composé de latex contenant moins de 55% de styrène est choisi dans le groupe constitué des latex synthétiques ou des latex synthétiques en mélange avec des latex naturels. En effet, des latex de tout polymère caoutchouteux peuvent être utilisés pour la mise en oeuvre de la présente invention. Ainsi, sont concernés les caoutchoucs naturels et les caoutchoucs synthétiques comme les homopolymères caoutchouteux de diènes, en particulier de butadiène et d'isoprène et les copolymères caoutchouteux de diènes avec du butadiène ou de l'isoprène ou avec des monomères éthyléniquement non saturés copolymérisables (par exemple, les halogénures de vinyle, les styrènes et les acides non saturées tels que l'acide acrylique et ses amides, nitriles et esters comme l'acrylamide, l'acrylonitrile et l'acrylate de méthyle). Sont également concernés les mélanges de ces latex avec des latex de polymère résineux des monomères mentionnées ci-dessus comme, par exemple, le polystyrène et les copolymères de butadiène et de styrène (copolymères styrène-butadiène ou SBR), y compris ceux modifiés par les groupements carboxy (xSBR), etc.

Dans la plupart des compositions de latex, un ajout de latex naturel est obligatoire pour l'obtention d'une gélification correcte, ce qui augmente considérablement les coûts de production. Dans la composition selon l'invention, il est possible de se passer aisément d'un tel ajout de latex naturel.

De préférence, ledit agent moussant non ionique est choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges.

Ces agents moussants non ioniques permettent avantageusement, selon la présente invention, d'obtenir une composition stable de latex de faible densité inférieure à 450 g/l, de préférence inférieure à 350 g/l, lors de leur utilisation. Ces agents moussants sont tels que la longueur de la chaîne est suffisamment grande pour permettre le moussage à une densité aussi faible que 450 g/l, voire aussi faible que 350 g/l, tout en étant suffisamment petite pour ne pas empêcher la gélification sans perturber la stabilité de la mousse.

En effet, en plus de dépendre des charges présentes, la gélification dépend également de la longueur de la chaîne mère de l'agent moussant et de celle des ramifications. Par exemple, plus le degré d'éthoxylation de l'agent moussant est important, plus il est hydrophile, les chaines latérales étant plus longues.

De préférence, la valeur HLB (balance hydrophile/hydrophobe) de l'agent moussant est comprise entre 3 et 8, de préférence entre 5 et 8.

Au sens de la présente invention, on entend par le terme « HLB », une expression empirique qui exprime la relation hydrophile et hydrophobe (ou lipophile) d'un tensioactif (agent moussant). Plus exactement, la balance hydrophile/hydrophobe (HLB) d'un tensioactif exprime les propriétés du tensioactif considéré. Un tensioactif aura donc une affinité plus importante pour l'eau si sa balance HLB est élevée (caractère hydrophile) et inversement, un tensioactif aura une affinité moins importante pour l'eau (caractère lipophile ou hydrophobe) lorsque sa valeur HLB sera faible.

Dans le cadre de la présente invention, il a été montré qu'une telle valeur HLB comprise entre 3 et 8 de l'agent moussant correspond à un agent moussant dont la longueur de la chaîne mère et la longueur des ramifications sont adéquates pour que le moussage ne soit pas trop peu important. Un agent moussant présentant une longueur de chaine trop importante est très moussant mais freine davantage la gélification en cassant l'agent coagulant. Par contre, un agent présentant une longueur de chaîne trop courte mousse difficilement et interagit moins avec l'agent coagulant et perturbe donc moins la gélification. C'est pourquoi il s'agit d'utiliser un agent moussant présentant une longueur de chaine adéquate, ce qui correspond, comme il a été montré dans le cadre de la présente invention, à un agent moussant dont la valeur HLB est comprise entre 3 et 8, de préférence entre 5 et 8.

Dans le cadre de la présente invention, il a été montré qu'un agent moussant non ionique, choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges, présente une longueur de chaîne optimale (ni trop longue, ni trop courte) pour permettre un moussage à une densité de 450 g/l, voire à une densité de 350 g/l, sans empêcher la gélification et sans affecter la stabilité de la mousse.

De préférence, la composition de latex selon l'invention comprend au moins un agent vulcanisant/accélérateur choisi dans le groupe constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.

Ces agents vulcanisants/accélérateurs permettent avantageusement la formation de ponts entre les macromolécules pour que le matériau final présente une certaine élasticité et résilience prédéterminée dont les formules et mécanismes de liaisons sont connus et publiés par Geert Heideman (Reduced Zinc Oxide Levels in Sulphur Vulcanisation of Rubber Compounds: Mechanistic Aspects of the Role of Activators and Multifunctional Additives, ISBN 9036520819, 9789036520812).

Avantageusement, la composition de latex selon l'invention comprend également une charge minérale choisie dans le groupe constitué du carbonate de calcium, du carbonate de magnésie, de la silice, du dioxyde de titane, du titanate de potassium, de fibres de verre, du talc, du noir de carbone, du feldspath, d'argiles telles que de kaolin et d'argile de silicate alcalin d'aluminium, de silicate d'alumine, de silicate de fer, des trihydrates d'alumine et de magnésie, de l'hydroxyde de calcium et leurs mélanges. Les charges sont dispersées dans ladite composition de latex, notamment pour en baisser le cout de production, ajouter du poids au tapis, diminuer le temps de séchage et réduire la pégosité du film.

De façon tout aussi avantageuse, la composition de latex selon la présente invention comprend en outre un épaississant choisi dans le groupe constitué d'épaississants à base de polyacrylate tels que le polyvinylpyrilidone, l'alcool polyvinylique, les polyacrylates et leurs sels, à base de polyuréthane, de cellulose de polysaccharide et ses dérivés tels que le carboxyméthylcellulose, l'hydroxyéthyl(ou méthyl)cellulose, les bentonites, les gommes naturelles telles celles de xanthane, agar agar, acacia, adragante, guar, la silice pyrogènée et leurs mélanges.

Ledit épaississant est destiné à augmenter la viscosité de ladite composition de latex afin d'atteindre une viscosité prédéterminée comprise entre 0,5 et 10 Pa.s, préférentiellement une viscosité de 1,4 à 1,8 Pa.s.

D'autres formes de réalisation d'une composition de latex selon l'invention sont indiquées dans les revendications annexées.

L'invention a aussi pour objet des produits comme compositions combinées pour utilisation simultanée, séparée ou échelonnée dans le temps pour préparer un latex moussé et gélifié présentant une densité inférieure à 450 g/l, de préférence inférieure à 350 g/l, comprenant :
a) un premier produit comprenant un agent gélifiant choisi dans le groupe des polyéther-polysiloxanes,
b) un deuxième produit comprenant un agent vulcanisant choisi dans le groupe constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.
c) un troisième produit comprenant un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges.
d) un quatrième produit comprenant un composé de latex choisi dans le groupe des latex naturels et des latex synthétiques et leurs mélanges.

Le fait de proposer plusieurs produits séparés plutôt qu'un mélange comprenant tous les produits simultanément est particulièrement avantageux notamment pour la commercialisation de pré-mélanges à ajouter à un composé de latex ou à une composition de latex telle que décrite ci-avant et prête à être gélifiée par un traitement thermique, suite au mélange. En effet, l'utilisateur peut conserver les différents produits indépendamment les uns des autres pendant plusieurs mois sans que ces derniers ne s'altèrent et ne se dégradent, ce qui ne serait pas le cas si les différents produits étaient mélangés et réagissaient ensemble lors de leur stockage à température ambiante. Ceci est particulièrement avantageux et indiqué lors de stockages dans des conditions de températures relativement élevées, par exemple dans les pays tropicaux où la composition pourrait (pré-)coaguler d'elle-même si l'agent coagulant (gélifiant) était préalablement mélangé au latex et éventuellement aux autres produits susdits avant stockage.

Avantageusement, les produits comme compositions combinées sont mélangés pour former des pré-mélanges desdites compositions combinées, lesdits pré-mélanges comprenant lesdits premier et deuxième produits et/ou lesdits premier, deuxième et troisième produits et/ou lesdits troisième et quatrième produits et/ou lesdits deuxième et quatrième produits.

Un pré-mélange comprenant un agent gélifiant (premier produit) et un agent vulcanisant (deuxième produit) présente l'avantage de pouvoir se conserver longtemps sans que les produits de s'altèrent ou ne réagissent entre eux.

De façon identique, un pré-mélange comprenant un agent gélifiant (premier produit) et un agent moussant (troisième produit) constitue un mélange de produits qui resteront stables et ne formeront pas de dérivés par réactions entre eux.

Un pré-mélange comprenant un agent moussant (troisième produit) et un composé de latex (quatrième produit) présente l'avantage de constitué un latex moussé pouvant être directement associé aux autres constituants lors du procédé de fabrication d'une composition de latex.

De façon tout aussi avantageuse, un pré-mélange comprenant un agent vulcanisant (deuxième produit) et un composé de latex (quatrième produit) constitue un mélange de produits qui resteront stables et ne formeront pas de dérivés par réactions entre eux.

Le fait de proposer des pré-mélanges présente un intérêt certain puisque l'utilisateur pourra directement utiliser des mélanges dont les constituants ont préalablement été dosés dans les proportions adéquates. De plus, travailler au départ de pré-mélanges évite à l'utilisateur de devoir procéder lui-même au mélange des produits, ce qui minimise les erreurs lors de la constitution des mélanges par pesées des différents constituants et ce qui fait gagner un temps certain lors de la fabrication de compositions de latex.

D'autres formes de réalisation d'une composition de latex selon l'invention sont indiquées dans les revendications annexées.

L'invention a aussi pour objet un procédé de fabrication d'une composition de latex comprenant les étapes suivantes :
a) amenée d'un composé de latex choisi dans le groupe des latex naturels et des latex synthétiques et leurs mélanges dans une cuve de mélange,
b) amenée d'un agent vulcanisant choisi dans le groupe des agents vulcanisants constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.
c) ajout d'un agent vulcanisant dans ladite cuve de mélange,
d) amenée d'un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges,
e) ajout dudit agent moussant non ionique dans ladite cuve de mélange avec formation d'un latex moussé gélifiable,
f) amenée d'un agent gélifiant choisi dans le groupe des polyéther-polysiloxanes,
g) ajout dudit agent gélifiant dans ladite cuve de mélange
h) amenée et ajout d'une charge choisie dans le groupes des charges constitué du carbonate de calcium, du carbonate de magnésie, de la silice, du dioxyde de titane, du titanate de potassium, de fibres de verre, du talc, du noir de carbone, du feldspath, d'argiles telles que de kaolin et d'argile de silicate alcalin d'aluminium, de silicate d'alumine, de silicate de fer, des trihydrates d'alumine et de magnésie, de hydroxyde de calcium et leurs mélanges.
i) amenée et ajout d'un épaississant choisi dans le groupe constitué d'épaississants à base de polyacrylate tels que le polyvinylpyrilidone, l'alcool polyvinylique, les polyacrylates et leurs sels, à base de polyuréthane, de cellulose de polysaccharide et ses dérivés tels que le carboxyméthylcellulose, l'hydroxyéthyl (ou méthyl) cellulose, les bentonites, les gommes naturelles telles celles de xanthane, agar agar, acacia, adragante, guar, la silice pyrogènée et leurs mélanges,
j) application dudit latex moussé gélifiable sur un support ou dans un moule,
k) gélification dudit latex moussé gélifiable appliqué sur un support ou dans un moule.

Avantageusement, selon l'invention, l'ajout dudit agent moussant non ionique est réalisé dans ladite cuve contenant ledit composé de latex ou dans ladite amenée dudit agent gélifiant.

De préférence, selon l'invention, l'ajout dudit agent vulcanisant est réalisé dans ladite cuve contenant ledit composé de latex ou dans ladite amenée dudit agent gélifiant.

Ces deux alternatives permettent avantageusement de réaliser les différents ajouts à des moments différents, ce qui permet de moduler le procédé de fabrication de ladite composition de latex mais aussi de moduler la disposition des installations requises pour la fabrication de ladite composition de latex.

Préférentiellement, selon le procédé de fabrication de la présente invention, ladite application dudit latex stable, moussé et gélifiable est effectuée sur une face opposée à une face apparente d'un tapis.

De préférence, selon le procédé de la présente invention, ladite gélification dudit latex stable, moussé et gélifiable appliqué sur un support ou dans un moule est réalisée par application de rayons caractérisés par une longueur d'onde du domaine de l'infrarouge. Ce passage sous infrarouges permet d'obtenir une gélification correcte, contrôlée et plus rapide. L'avantage de l'utilisation d'un infrarouge (IR) est la pénétration en profondeur du rayonnement calorifuge, dans la masse, permettant la gélification homogène de la couche moussée de ladite composition de latex. Des fines couches peuvent-être gélifiées par passage dans un simple four tandis que, pour des couches d'une épaisseur supérieure à 3 mm, l'IR est impératif.

Avantageusement, le procédé selon la présente invention comprend en outre une étape d'estampage d'un motif sur ledit latex moussé et gélifié. Cette étape permet de former des dessins dans la couche de latex gélifié, ces dessins formant généralement des creux qui sont utiles afin d'augmenter la surface améliorant ainsi les propriétés adhérentes ou antidérapants.

D'autres formes de réalisation du procédé de fabrication d'une composition de latex selon l'invention sont indiquées dans les revendications annexées.

L'invention porte également sur l'utilisation de la composition de latex pour fabriquer des dossiers de tapis, de préférence uniformes et des matelas.

L'invention porte également sur l'utilisation d'un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges, pour la gélification de compositions de latex présentant une densité inférieure à 450 g/l, de préférence inférieure à 350 g/l, à l'état moussé et gélifié.

L'invention porte également sur l'utilisation d'un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges, pour la fabrication de dossiers de tapis et de matelas.

D'autres formes d'utilisation de composition de latex et d'utilisation de l'agent gélifiant selon l'invention sont indiquées dans les revendications annexées.

D'autres caractéristiques, détails et avantages de l'invention ressortiront de la description donnée ci-après, à titre non limitatif et en faisant référence aux figures annexées.
La figure 1 est une illustration d'un mode de réalisation d'un procédé de fabrication de dossiers de tapis selon l'invention.
La figure 2 est une illustration d'un mode de réalisation d'un procédé de fabrication de matelas selon l'invention.

Sur les figures, les éléments identiques ou analogues portent les mêmes références.

Selon un mode de réalisation selon l'invention, une composition de latex présentant une densité inférieure à 450 g/l à l'état moussé et gélifié et comprenant un agent gélifiant choisi dans le groupe des polyéther-polysiloxanes, de l'oxyde de zinc comme agent vulcanisant, un acide gras éthoxylé comme agent moussant non ionique et un composé de latex styrène-butadiène contenant moins de 55% de styrène, est obtenue par l'amenée de chacun de ces produits dans une cuve de mélange où ils sont mélangés afin d'obtenir une composition de latex stable, moussable, gélifiable et homogène. Chacun de ces constituants doit être préalablement dosé précisément pour que la composition de latex obtenue après mélange soit stable et présente les caractéristiques attendues dont une densité inférieure à 450 g/l à l'état moussé et gélifié.

Selon un autre mode de réalisation selon l'invention, une composition de latex présentant une densité inférieure à 450 g/l à l'état moussé et gélifié est obtenue en mélangeant, dans une cuve de mélange, d'une part un premier pré-mélange comprenant un polyéther-polysiloxane comme agent gélifiant et de l'oxyde de zinc comme agent vulcanisant avec, d'autre part, un composé de latex styrène-butadiène (SBR) carboxylé contenant moins de 55% de styrène et avec l'éther de polyéthylène glycol en C10 à 10 éthoxylation (10 EO) utilisé comme agent moussant non ionique. Ledit composé de latex et ledit agent moussant non ionique sont soit ajoutés séparément au premier pré-mélange dans la cuve de mélange ou constituent un deuxième pré-mélange lorsqu'ils sont mélangés ensemble avant d'être ajoutés au premier pré-mélange dans la cuve de mélange.

Selon un autre mode de réalisation selon l'invention, une composition de latex présentant une densité inférieure à 450 g/l à l'état moussé et gélifié est obtenue en mélangeant, dans une cuve de mélange, d'une part, un premier pré-mélange comprenant un polyéther-polysiloxanecomme agent gélifiant, de l'oxyde de zinc comme agent vulcanisant et du NEUTRON NI.4 comme agent moussant non ionique avec, d'autre part, un composé de latex styrène-butadiène (SBR) carboxylé contenant moins de 55% de styrène. Selon ce mode de réalisation, le composé de latex est ajouté de façon indépendante dans la cuve de mélange au premier pré-mélange.

Selon encore un autre mode de réalisation selon l'invention, une composition de latex présentant une densité inférieure à 450 g/l à l'état moussé et gélifié est obtenue en mélangeant, dans une cuve de mélange, d'une part, un premier pré-mélange comprenant de l'oxyde de zinc comme agent vulcanisant, un composé de latex naturel et un composé de latex styrène-butadiène (SBR) carboxylé contenant moins de 55% de styrène avec, d'autre part un polyéther-polysiloxane utilisé comme agent gélifiant et l'éther de polyéthylène glycol en C10 à 10 éthoxylations (10 EO) utilisé comme agent moussant non ionique. Ces deux derniers produits sont soit ajoutés séparément au premier pré-mélange dans la cuve de mélange ou constituent un deuxième pré-mélange lorsqu'ils sont mélangés ensemble avant d'être ajoutés au premier pré-mélange dans la cuve de mélange.

A toutes les compositions de latex obtenues selon chacun des modes de réalisation mentionnés ci-dessus, peuvent être ajoutés les constituants suivants : une charge étant choisie dans le groupe constitué du carbonate de calcium, de carbonate de magnésie, de la silice, du dioxyde de titane, du titanate de potassium, de fibres de verre, de talc, de noir de carbone, de feldspath, d'argiles telles que de kaolin et l'argile de silicate alcalin d'aluminium, le silicate d'alumine, le silicate de fer, les trihydrates d'alumine et de magnésie, l'hydroxyde de calcium et leurs mélanges et/ou un épaississant étant choisi dans le groupe constitué d'épaississants à base de polyacrylate tels que le polyvinylpyrilidone, l'alcool polyvinylique, les polyacrylates et leurs sels, à base de polyuréthane, de cellulose de polysaccharide et ses dérivés tels que le carboxyméthylcellulose, l'hydroxyéthyl (ou méthyl) cellulose, les bentonites, les gommes naturelles telles celles de xanthane, agar agar, acacia, adragante, guar, la silice pyrogènée et leurs mélanges.

L'utilisation de pré-mélanges combinant au moins deux produits est particulièrement avantageuse puisque l'utilisateur travaille au départ de compositions déjà dosées et homogénéisées. Ceci constitue un gain de temps certain lors de la réalisation des mélanges des produits pour obtenir ladite composition de latex et permet d'éviter des erreurs de dosage des produits.

Par ailleurs, les combinaisons des produits pour former les pré-mélanges sont réalisées pour que les produits pré-mélangés constituent des pré-mélanges stables pouvant être conservés plusieurs mois sans altération et/ou dégradation des produits.

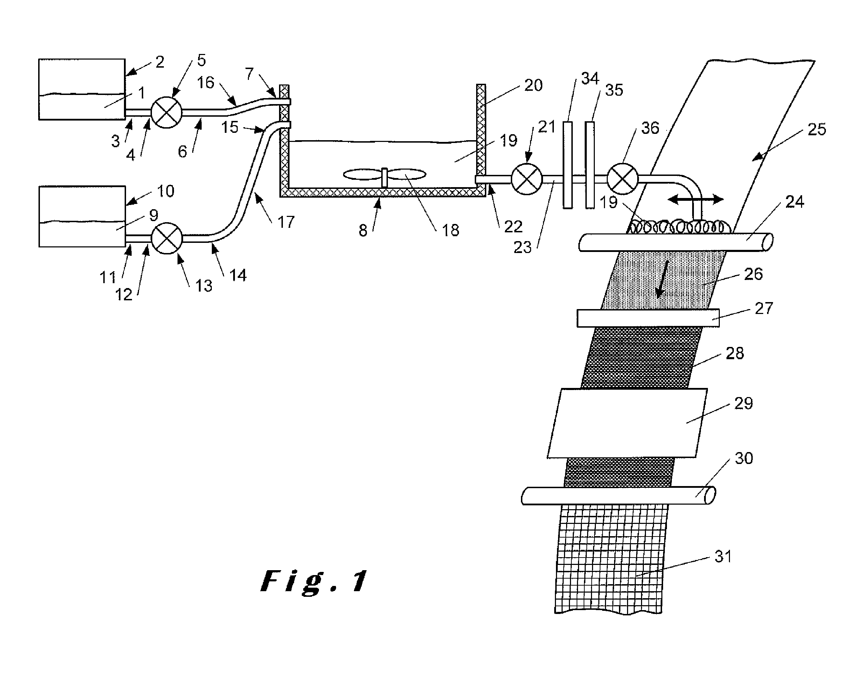

Selon un mode de réalisation préféré d'un procédé de fabrication de dossiers de tapis illustré à la figure 1, une composition de latex selon l'invention est préparée en mélangeant un composé de latex choisi dans le groupe des latex naturels et des latex synthétiques et contenant moins de 55% de styrène avec un pré-mélange comprenant un polyéther-polysiloxane comme premier produit comprenant un agent gélifiant, un oxyde de zinc comme deuxième produit comprenant un agent vulcanisant et l'éther de polyéthylène glycol en C10 à 10 éthoxylations (10 EO) comme troisième produit comprenant un agent moussant non ionique.

D'une part, ledit composé de latex (1) est initialement contenu dans un réservoir (2) muni d'une sortie (3) connectée à l'entrée (4) d'une pompe (5) dont la sortie (6) est reliée à une entrée (7) d'une cuve de mélange (8). D'autre part, ledit pré-mélange (9) est contenu dans un autre réservoir (10) également muni d'une sortie (11) connectée à l'entrée (12) d'une pompe (13) dont la sortie (14) est reliée à une entrée (15) de la cuve de mélange (8). La pompe (5) et la pompe (13) sont activées afin d'amener respectivement ledit composé de latex (1) et ledit pré-mélange (9) dans ladite cuve de mélange (8), respectivement par les tuyaux d'amenée (16, 17) connectés aux entrées (7, 15) de ladite cuve de mélange (8). Dans ladite cuve de mélange (8), ledit composé de latex (1) et ledit pré-mélange (9) sont mélangés à l'aide d'un dispositif (18) agencé pour homogénéiser le mélange. Lors de cette étape de mélange, il y a formation d'une composition de latex (19) homogène.

Ladite cuve (8) est éventuellement munie d'un système de refroidissement (20) pour refroidir la composition (19) à laquelle de l'énergie est incorporée lors du mélange, ceci afin d'éviter une pré-gélification de ladite composition (19) soumise à une température élevée par accumulation d'énergie.

Une fois la composition de latex (19) homogène obtenue, une pompe (21) reliée à une sortie (22) de ladite cuve de mélange (8) assure l'aspiration de ladite composition (19) qui est amenée à deux mousseuses (34, 35) placées en série où à lieu le moussage pour que la composition de latex (19) présente une densité inférieure à 450 g/l.

Ensuite, la composition de latex (19) présentant une densité inférieure à 450 g/l est amenée, par l'intermédiaire d'une pompe (36) et d'un tuyau (23) effectuant des mouvements de va-et-vient (indiqué par la double flèche), devant un racloir (rouleau fixe) (24) sous lequel défile une face opposée à une face apparente d'un tapis (25) (sens indiqué par la flèche). Le positionnement dudit rouleau (24), maintenu à une hauteur prédéterminée par rapport à la surface de ladite une face opposée à une face apparente d'un tapis (25), permet un étalement homogène de ladite composition de latex moussée et gélifiable (19) qui va ainsi être étalée sous forme d'une couche régulière et homogène (26) sur ladite une face opposée à une face apparente d'un tapis (25) défilant sous ledit rouleau (24).

Ladite une face opposée à une face apparente d'un tapis (25) ainsi recouverte par une couche régulière et homogène (26) de ladite composition de latex moussée et gélifiable (19) va alors défiler sous un dispositif à infrarouge (27) qui est agencé pour assurer la gélification de ladite composition de latex moussée et gélifiable (19) couvrant ladite une face opposée à une face apparente d'un tapis (25). Suite à cette première étape de gélification, ladite une face opposée à une face apparente d'un tapis (25) comprenant une composition de latex gélifiée (28) à sa surface est amenée dans un étuveur de gélification (ou four de gélification) (28) où à lieu une seconde étape de gélification par déshydratation partielle de la couche de latex gélifiée (28) présente sur ladite une face opposée à une face apparente d'un tapis (25).

Suite à cette seconde étape de gélification, ladite une face opposée à une face apparente d'un tapis (25) est entrainée vers un estampeur (30) agencé pour imprimer, par rotation autour d'un axe, des motifs (31) dans la couche de latex gélifié.

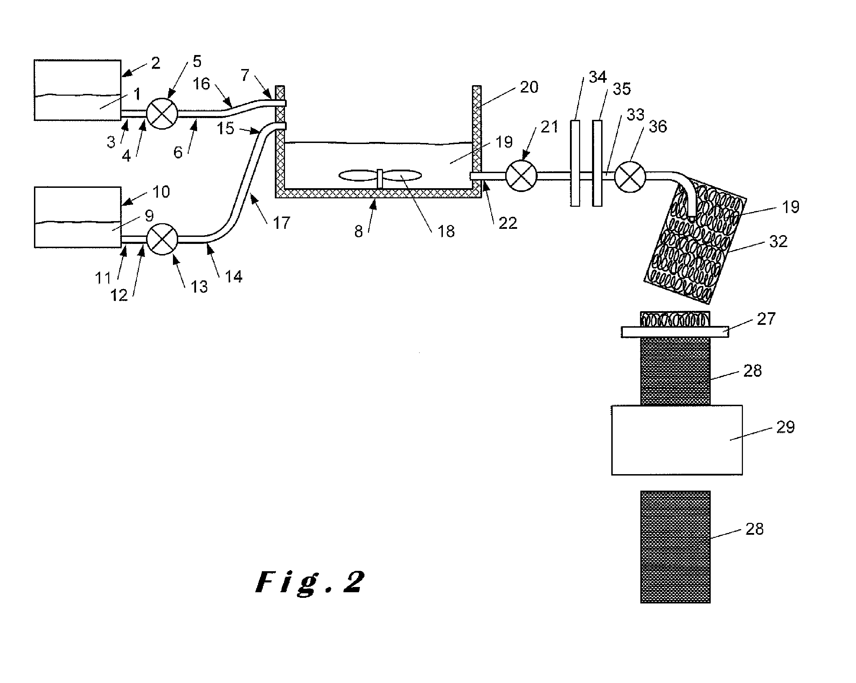

La figure 2 illustre un procédé de fabrication de matelas selon l'invention. Les étapes de ce procédé sont identiques à celles décrites pour l'obtention de dossiers de tapis jusqu'à l'étape de moussage ayant lieu dans les mousseuses (34, 35) placées en série. Suite au moussage, la composition de latex (19) présente une densité inférieure à 450 g/l. Cette composition de latex (19) présentant une densité inférieure à 450 g/l est amenée dans un moule (32) par l'intermédiaire d'un tuyau (33) et d'une pompe (36). Le moule (32), une fois rempli par ladite composition de latex moussée et gélifiable jusqu'à une hauteur prédéterminée, est entrainé vers un dispositif à infrarouge (27) qui est agencé pour assurer la gélification de ladite composition de latex moussée et gélifiable (19). Suite à cette première étape de gélification, ledit moule (32) comprenant une composition de latex gélifiée (28) est amené dans un étuveur (ou four de gélification) (29) où à lieu une seconde étape de gélification par déshydratation partielle de la couche de latex gélifié (28) présente dans ledit moule (32). Une fois la gélification achevée, les matelas obtenus sont sortis dudit moule (32) (étape de démoulage).

### EXEMPLES

### Exemple 1 : compositions de latex selon l'invention

Une première composition de latex (parties en poids sec) a été préparée en utilisant la formulation suivante présentée au tableau 1.

**Tableau 1 : composition n°1 selon l'invention**

| **Composants** | **ppc** | **Description** |
|---|---|---|
| NR Latex LA | 30 | Latex naturel ammoniac bas |
| xSBR - XZ 92227.01 | 70 | Latex styrène-butadiène carboxylé styrène = 51-52% |
| Coagulant TPA 4380 | 0,6 | Agent coagulant: polyéther polysiloxane de momentive |
| Neutron NI.5 | 1,5 | Agent moussant non ionique : Mélange de : alkyléther de polyéthylène glycol en C10 à 10 éthoxylations (10EO) : Lutensol®XL.100 ; Cocodiméthylaminoxide : Genaminox® CSL ; éther polyglycol aromatique : Emulvin® W ; Alkyldihydroxyéthyl amine oxide : Genaminox ® CHE ; alcool gras alcoxylé : Genapol® 2822 |
| Oxyde de zinc | 1,6 | Agent vulcanisant |
| MBT | 0,5 | Accélérateur |
| ZDBC | 1 | Accélérateur |
| Souffre | 2 | Agent Vulcanisant |
| Carbonate de calcium 80 µm | 170 | Charge |
| Methocel™ 228 | 0,1 | Agent épaississant : hydroxypropylméthyl cellulose modifié. |

Le latex naturel est un latex polyisoprène naturel et le latex SBR est un latex carboxylé contenant 52 % de styrène.

Une seconde composition de latex (parties en poids sec) a été préparée en utilisant la formulation suivante présentée au tableau 2.

**Tableau 2 : composition n°2 selon l'invention**

| **Composants** | **ppc** | **Description** |
|---|---|---|
| xSBR-XZ 92227.01 | 100 | Latex styrène-butadiène carboxylé = 51-52% |
| Tego® Coagulant 4720 | 0,5 | Agent coagulant : polyéther polysiloxane de Evonik® |
| Neutron NI.4 | 2 | Agent moussant non ionique : Mélange de : alkyléther de polyéthylène glycol en C10 à 10 éthoxylations (10EO) : Lutensol® XL.100 ; Cocodiméthylaminoxide : Genaminox® CSL ; éther de polyglycol aromatique : Emulvin W ; alkyldihydroxyéthyle amine oxide : Genaminox ® CHE ; alcool gras alcoxylé : Genapol® 2822 |
| Oxyde de zinc | 1 | Agent vulcanisant |
| MBT | 0,4 | Accélérateur |
| ZDBC | 0,8 | Accélérateur |
| Carbonate de calcium 80 µm | 170 | Charge |
| Methocel™ 228 | 0,07 | Agent épaississant : hydroxypropylméthyle cellulose modifié. |

Le latex SBR est un latex carboxylé contenant 52 % de styrène.

Une troisième composition de latex (parties en poids sec) a été préparée en utilisant la formulation suivante présentée au tableau 3.

**Tableau 3 : composition n°3 selon l'invention**

| **Composants** | **pc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| Neutron NI.6 | 1,9 | Agent moussant non ionique : Mélange de : alkyléther de polyéthylène glycol en C10 à 10 éthoxylations (10EO) : Lutensol® XL.100 ; Cocodiméthylaminoxide : Genaminox® CSL ; éther depolyglycol aromatique : Emulvin W ; alkyldihydroxyéthyle amine oxide : Genaminox ® CHE ; alcool gras alcoxylé : Genapol® 2822 |
| Oxyde de zinc | 1,6 | Agent vulcanisant |
| Carbonate de calcium 80 µm | 170 | Charge |
| Methocel™ 228 | 0,07 | Agent épaississant : hydroxypropylméthyle cellulose modifié. |

Le latex SBR est un latex carboxylé contenant 52 % de styrène.

### Exemple 2 : exemples comparatifs

Les trois compositions comprenant un agent moussant non ionique obtenues selon l'invention et décrites ci-dessus ont été comparées en terme de gélification à des compositions comprenant des agents moussants ioniques et dont les compositions sont reprises ci-après au tableau 4 à 11.

**Tableau 4 : composition n°4**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| Oléate de potassium | 1,5 | Agent Moussant anionique : sel potassique de l'oleïne. |
| Oxyde de zinc | 1,6 | Agent vulcanisant |
| Carbonate de calcium 80 µm | 170 | Charge |
| Methocel™ 228 | 0,1 | Agent épaississant : hydroxypropylméthyle cellulose modifié. |

**Tableau 5 : composition n°5**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| LaurylEtherSulfate de Soude | 1,5 | Agent moussant anionique |
| Oxyde de zinc | 1,6 | Agent vulcanisant |
| Carbonate de calcium 80 µm | 170 | Charge |
| Methocel™ 228 | 0,1 | Agent épaississant : hydroxypropylméthyle cellulose modifié. |

**Tableau 6 : composition n°6**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| LaurylSulfate de Soude | 1,5 | Agent moussant anionique |
| Oxyde de zinc | 1,6 | Agent vulcanisant |
| Carbonate de calcium 80 µm | 170 | [Charge |
| Methocel™ 228 | 0,1 | Agent épaississant : hydroxypropylméthyle cellulose modifié. |

**Tableau 7 : composition n°7**

| **Composants** | p**pc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| Hostapur OS | 1,5 | Agent moussant anionique: C14-C16 alpha oléfine sulfonate |
| Oxyde de zinc | 1,6 | Agent vulcanisant |
| Carbonate de calcium 80 µm | 170 | Charge |
| Methocel™ 228 | 0,1 | Agent épaississant : hydroxypropylméthyle cellulose modifié. |

**Tableau 8 : composition n°8**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| Diéthylhexyl succinate de soude | 1,3 | Agent moussant anionique |
| Oxyde de zinc | 1,6 | Agent vulcanisant |
| Carbonate de calcium 80 µm | 170 | Charge |
| Methocel™ 228 | 0,1 | Agent épaississant : hydroxypropylméthyle cellulose modifié. |

**Tableau 9 : composition n°9**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| Succinamate de soude (Suif) | 1,4 | Agent moussant anionique |
| Oxyde de zinc | 1,6 | Agent vulcanisant |
| Carbonate de calcium 80 µm | 170 | Charge |
| Methocel™ 228 | 0,25 | Agent épaississant : hydroxypropylméthyle cellulose modifié. |

**Tableau 10 : composition n°10**

| **Composants** | **ppc** | **Description** |
|---|---|---|
| xSBR - XZ 92227. 01 | 100 | Latex styrène-butadiène carboxylé = 51-52% |
| Tego® Coagulant 4720 | 0,5 | Agent coagulant : polyéther polysiloxane de Evonik |
| RicinOléate de Potasse | 1,5 | Agent moussant anionique: sel potassique de l'huile de ricin. |
| Oxyde de zinc | 1,6 | Agent vulcanisant |
| Carbonate de calcium 80 µm | 170 | Charge |
| Methocel™ 228 | 0,06 | Agent épaississant : hydroxypropylméthyle cellulose modifié. |

**Tableau 11 : composition n°11**

| **Composants** | **ppc** | **Description** |
|---|---|---|
| xSBR - XZ 92227.01 | 100 | Latex styrène-butadiène carboxylé = 51-52% |
| Tego® Coagulant 4720 | 0,5 | Agent coagulant : polyéther polysiloxane de Evonik® |
| DDBS-Na (C18H29SO3Na) | 1,5 | Agent moussant anionique: alkylbenzènesulfonate de soude |
| Oxyde de zinc | 1,6 | Agent vulcanisant |
| Carbonate de calcium 80 µm | 170 | Charge |
| Methocel™ 228 | 0,17 | Agent épaississant : hydroxypropylméthyle cellulose modifié. |

Toutes ces compositions, mentionnées aux tableaux 1 à 11, ont été testées comme suit :
- application sur un support et sur une hauteur de 2 mm d'une quantité comprise entre 2 et 7 g d'une composition de latex selon les tableaux 1 à 11,
- chauffage de ladite composition de latex appliquée sur ledit support à l'aide d'une lampe infrarouge d'une puissance de 250 Watt placée à une hauteur de 5 cm par rapport au support, durant un temps maximal de 15 secondes.

Au terme de cette opération de chauffage, pour que la composition de latex soit considérée comme étant une composition de latex gélifiable au sens de la présente invention, la gélification (coagulation) de ladite composition de latex doit être totale, c'est-à-dire que l'opération de chauffage susdite doit permettre d'obtenir une masse solide non liquide de ladite composition de latex. Les résultats de ces essais sont repris au tableau 12.

**Tableau 12 :**

| Composition n° | Gélification / coagulation | Solidification | Durée (secondes) |
|---|---|---|---|
| 1 | totale | / | 9 |
| 2 | totale | / | 10 |
| 3 | totale | / | 12 |
| 4 | / | par évaporation | 135 |
| 5 | / | par évaporation | 122 |
| 6 | / | par évaporation | 138 |
| 7 | / | par évaporation | 141 |
| 8 | / | par évaporation | 128 |
| 9 | / | par évaporation | 120 |
| 10 | / | par évaporation | 134 |
| 11 | / | par évaporation | 137 |

Ces résultats démontrent que seules les compositions selon l'invention comprenant un agent moussant non ionique permettent d'obtenir rapidement une gélification sous infrarouge de la composition de latex tandis que les compositions comprenant des agents moussants ioniques ne gélifient pas mais se solidifient par évaporation et perte d'eau après un temps plus long.

Il est bien entendu que la présente invention n'est en aucune façon limitée aux formes de réalisations décrites ci-dessus et que bien des modifications peuvent y être apportées sans sortir du cadre des revendications annexées

## Revendications

1. Composition de latex comprenant :
a) au moins un composé de latex contenant moins de 55% de styrène,
b) un agent gélifiant sensible à la chaleur choisi dans le groupe des polyéther-polysiloxanes,
c) un agent moussant, et
d) au moins un agent vulcanisant,
**caractérisée en ce que** ledit agent moussant est un agent moussant non ionique et **en ce que** ladite composition de latex présente, à l'état moussé et gélifié, une densité inférieure à 450 g/l, de préférence inférieure à 350 g/l.

2. Composition selon la revendication 1 **caractérisée en ce que** ledit composé de latex contenant moins de 55% de styrène est choisi dans le groupe constitué des latex synthétiques ou des latex synthétiques en mélange avec des latex naturels.

3. Composition selon la revendication 1, **caractérisée en ce que** ledit agent moussant non ionique est choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges.

4. Composition selon la revendication 1, **caractérisée en ce que** ledit au moins un agent vulcanisant choisi dans le groupe constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.

5. Composition selon la revendication 1, **caractérisée en ce qu'**elle comprend en outre une charge, ladite charge étant choisie dans le groupe constitué du carbonate de calcium, du carbonate de magnésie, de la silice, du dioxyde de titane, du titanate de potassium, de fibres de verre, du talc, du noir de carbone, du feldspath, d'argiles telles que de kaolin et d'argile de silicate alcalin d'aluminium, de silicate d'alumine, de silicate de fer, des trihydrates d'alumine et de magnésie, de l'hydroxyde de calcium et leurs mélanges.

6. Composition selon la revendication 1, **caractérisée en ce qu'**elle comprend en outre un épaississant, ledit épaississant étant choisi dans le groupe constitué d'épaississants à base de polyacrylate tels que le polyvinylpyrilidone, l'alcool polyvinylique, les polyacrylates et leurs sels, à base de polyuréthane, de cellulose de polysaccharide et ses dérivés tels que le carboxyméthylcellulose, l'hydroxyéthyl(ou méthyl)cellulose, les bentonites, les gommes naturelles telles celles de xanthane, agar agar, acacia, adragante, guar, la silice pyrogènée et leurs mélanges.

7. Produits comme compositions combinées pour utilisation simultanée, séparée ou échelonnée dans le temps pour préparer un latex moussé et gélifié présentant une densité inférieure à 450 g/l, comprenant :
a) un premier produit comprenant un agent gélifiant choisi dans le groupe des polyéther-polysiloxanes,
b) un deuxième produit comprenant un agent vulcanisant choisi dans le groupe constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.
c) un troisième produit comprenant un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges.
d) un quatrième produit comprenant un composé de latex choisi dans le groupe des latex naturels et des latex synthétiques et leurs mélanges.

8. Produits comme compositions combinées selon la revendication 7 comme pré-mélanges desdites compositions combinées, lesdits pré-mélanges comprenant lesdits premier et deuxième produits et/ou lesdits premier, deuxième et troisième produits et/ou lesdits troisième et quatrième produits ou lesdits deuxième et quatrième produits.

9. Procédé de fabrication d'une composition de latex comprenant les étapes suivantes :
a) amenée d'un composé de latex choisi dans le groupe des latex naturels et des latex synthétiques et leurs mélanges dans une cuve de mélange,
b) amenée d'un agent vulcanisant choisi dans le groupe des agents vulcanisants constitué des oxydes, des mercaptos, des sulfénamides, des thiurames, des thiocarbamates, des amines, des thiophosphates, des thiourées, des thiazoles, des guanidines, tels que par exemple le bis-(dibutyldithiocarbamate) de zinc (ZDBC), le diéthyldithiocarbamate de zinc (ZDEC), le diméthyldithiocarbamate de zinc (ZDMC), le 2-mercaptobenzothiazole de zinc ou de soude (MBT ou NaMBT), le disulfure de 2,2'-dithiobenzothiazole (MBTS), le N-cyclohexylbenzothiazole-2-sulfénamide (CBS), le N-tert-butylbenzothiazole-2-sulfénamide (TBBS), le bis-(triéthoxysilylpropyl)tetrasulfure (TESPT), le disulfure de tétraéthylthiurame, le disulfure tétraméthylthiurame (TMTD), le monosulfure de tétraméthylthiurame (TMTM), le polysulfure de tétraméthylthiurame (TMTP), l'hexasulfure de dipentaméthylène thiurame (DPTH), le diméthyldithiocarbate (DMTC), la thiourée N,N'-éthylène (ETU), le 2-(morpholinothio)-benzothiazole (MBS), le soufre (S), le N,N'-diphénylguanidine, le N,N'-di-o-tolylguanidine, les oxydes de magnésie (MgO), de zinc (ZnO), de calcium (CaO), de barium (BaO), de cuivre (CuO), de cérium (CeO), de l'acide stéarique (AS), le stéarate de zinc, le 2-éthylhexanoate de zinc (ZEH), le mono-glycérolate de zinc (Zn-m-glyc), le sulfure de zinc (ZnS), le dibutylamine (DBA), le diphénylguanidine (DPG) et leurs mélanges.
c) ajout d'un agent vulcanisant dans ladite cuve de mélange,
d) amenée d'un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges.
e) ajout dudit agent moussant non ionique dans ladite cuve de mélange avec formation d'un latex moussé gélifiable,
f) amenée d'un agent gélifiant choisi dans le groupe des polyéther-polysiloxanes,
g) ajout dudit agent gélifiant dans ladite cuve de mélange
h) amenée et ajout d'une charge choisie dans le groupes des charges constitué du carbonate de calcium, du carbonate de magnésie, de la silice, du dioxyde de titane, du titanate de potassium, de fibres de verre, du talc, du noir de carbone, du feldspath, d'argiles telles que de kaolin et d'argile de silicate alcalin d'aluminium, de silicate d'alumine, de silicate de fer, des trihydrates d'alumine et de magnésie, de hydroxyde de calcium et leurs mélanges.
i) amenée et ajout d'un épaississant choisi dans le groupe constitué d'épaississants à base de polyacrylate tels que le polyvinylpyrilidone, l'alcool polyvinylique, les polyacrylates et leurs sels, à base de polyuréthane, de cellulose de polysaccharide et ses dérivés tels que le carboxyméthylcellulose, l'hydroxyéthyl (ou méthyl) cellulose, les bentonites, les gommes naturelles telles celles de xanthane, agar agar, acacia, adragante, guar, la silice pyrogènée et leurs mélanges,
j) application dudit latex moussé gélifiable sur un support ou dans un moule,
k) gélification dudit latex moussé gélifiable appliqué sur un support ou dans un moule.

10. Procédé de fabrication selon la revendication 9, **caractérisé en ce que** ledit ajout de l'agent moussant non ionique est réalisé dans ladite cuve contenant ledit composé de latex.

11. Procédé de fabrication selon la revendication 9, **caractérisé en ce que** ledit ajout de l'agent moussant non ionique est réalisé dans ladite amenée dudit agent gélifiant.

12. Procédé de fabrication selon la revendication 9, 10 ou 11, **caractérisé en ce que** ledit ajout de l'agent vulcanisant est réalisé dans ladite cuve contenant ledit composé latex.

13. Procédé de fabrication selon la revendication 9, **caractérisé en ce que** ledit ajout de l'agent vulcanisant est réalisé dans ladite amenée dudit agent gélifiant.

14. Procédé de fabrication selon la revendication 9, **caractérisé en ce que** ladite application dudit latex moussé gélifiable est effectuée sur une face opposée à une face apparente d'un tapis.

15. Procédé de fabrication selon la revendication 9, **caractérisé en ce que** ladite gélification dudit latex moussé gélifiable appliqué sur un support ou dans un moule est réalisée par application de rayons **caractérisés par** une longueur d'onde du domaine de l'infrarouge.

16. Procédé de fabrication selon la revendication 9, **caractérisé en ce qu'**il comprend en outre une étape d'estampage d'un motif sur ledit latex moussé et gélifié.

17. Utilisation de la composition de latex selon l'une des quelconques revendications 1 à 8 pour fabriquer des dossiers de tapis, de préférence uniformes et des matelas.

18. Utilisation d'un agent moussant non ionique choisi dans le groupe des agents moussants non ioniques constitué des éthers d'alcool gras polyglycolés ou sulfatés, des huiles de ricin éthoxylées, des amines grasses éthoxylées, des acides gras éthoxylés, des esters de glycérol, des esters de glycol, des esters de polyoxyéthylèneglycol, des esters de sorbitan polyoxyéthyléniques, des esters de sucres, des alcanolamides condensés, des oxydes aminés, des polyéthylènes glycols, des esters de sorbitan éthoxylés ou non éthoxylés, des copolymères éthoxylés/propoxylés et leurs mélanges, pour la gélification de compositions de latex présentant une densité inférieure à 450 g/l, de préférence inférieure à 350 g/l, à l'état moussé et gélifié.

19. Utilisation d'un agent moussant non ionique selon la revendication 18, pour la fabrication de dossiers de tapis et de matelas.
